(19) **Europäisches Patentamt / European Patent Office / Office européen des brevets**

(11) **EP 1 860 893 B1**

(12) **EUROPEAN PATENT SPECIFICATION**

(45) Date of publication and mention
of the grant of the patent:
**26.08.2009 Bulletin 2009/35**

(51) Int Cl.:
*H04W 8/26* (2009.01)    *H04W 84/00* (2009.01)
*H04Q 3/00* (2006.01)

(21) Application number: **07114720.1**

(22) Date of filing: **23.04.1999**

(54) **A mobile telecommunications system supporting the use of functional numbers**

Mobiles Telekommunikationssystem

Système de télécommunications mobile

(84) Designated Contracting States:
**DE FR GB**

(30) Priority: **23.04.1998 GB 9808725**
**23.04.1998 GB 9808723**

(43) Date of publication of application:
**28.11.2007 Bulletin 2007/48**

(62) Document number(s) of the earlier application(s) in
accordance with Art. 76 EPC:
**99303149.1 / 0 952 744**

(73) Proprietor: **Nortel Networks Limited**
**St Laurent, Québec H4S 2A9 (CA)**

(72) Inventors:
• **Joly, Céline Aline Paulette**
**Berkshire SL6 4JP (GB)**

• **Pham, Thanh**
**Plano, TX 75024 (US)**
• **Candish, John**
**London W4 5LG (GB)**
• **Fuller, Jeremy**
**Berkshire SL6 4EB (GB)**
• **Sharp, Lain**
**Berkshire SL6 5DD (GB)**
• **Scheving, Michaela**
**Richardson, TX 75080 (US)**
• **Le, Khuong Quang**
**Plano, TX 75093 (US)**

(74) Representative: **Bird, William Edward et al**
**Bird Goën & Co.**
**Klein Dalenstraat 42A**
**3020 Winksele (BE)**

(56) References cited:
**EP-A- 0 431 453          US-A- 5 566 235**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## FIELD OF THE INVENTION

The present invention relates to mobile communications systems and, in particular, although not restricted to such, relates to a utility communications system.

## BACKGROUND OF THE INVENTION

Wireless mobile telecommunication services are now quite commonplace. There are in existence worldwide several wireless mobile telephony standards which are provided for general public use, by way of subscription or similar. Many advantages of mobile wireless telephony exist over standard fixed line POTS telephony systems, the most significant being that the mobile telephone is mobile as such, provided that the use of a particular mobile telephone corresponds within a region covered by the operator to which the mobile subscriber is connected to.

Specialised mobile communication schemes are also becoming more frequently deployed. A number of bodies are defining requirements and standards for utility mobile communication schemes for Railway systems. These include the Mobile Radio for Railway Networks in Europe (MORANE) group, a consortium of European railway operators and equipment manufacturer with European Union funding who are defining a pan-European standard. The MORANE standard specifies extensions to the Global System for Mobile Communications (GSM) standard for application in the Railways environment: Other bodies involved in specifying requirements or standards in this area include EIRENE and ETSI itself. The term GSM-Railways (GSM-R) has been adopted as an umbrella term to cover all Railway system schemes. For simplicity, in the description of the prior art and the invention, reference shall be made to GSM-R systems and in particular the MORANE standard, but it is to be understood that the scope of the claims are not to be limited to such and is applicable to all GSM/ GSM-R derivative systems.

In a GSM-Railway network, communication is required between different user types (person to person, person to system, system to system) in different environments (on the same train, from train to train, from/to ground to/from train, from ground to ground). The different user types need to be able to communicate with each other using special railway numbers, i.e. Functional Numbers (FN) which reflect functional information such as the train number the user is on, the function of the train (goods or passenger), the function of the person who is assigned a particular GSM-R phone etc. A central register, known as the Functional Home Location Register (HLRf), stores the Functional Numbers and their related data. An access matrix function which provides means of checking which person call another one, is located on the central functional register. The intention is to enable GSM-R personnel and systems to use the Functional Number instead of the GSM Mobile Station ISDN number (MSISDN) for dialling and display purposes.

In order for this to work a service called 'Follow Me' has been specified, which allows a MS user to register a temporarily assigned FN against a temporarily assigned MS, and deregister the association once he no longer requires either the FN or the MS. For example when a train operator starts working on a train or in a station, he needs to be able to enter the FN he has been assigned for the journey or for the day on the particular mobile station (MS) he is going to use, and have that association stored in a central register associated with the system. Any calls to the FN need access to the central register to determine which MS the train operator is using and therefore where to route the call. The train operator needs to be able to check the status of the FN by performing an interrogation sequence, and when the train operator has finished working with his assigned MS, he needs to be able to de-register the FN.

Relationship of FN to Railway Access Code and Railway Subscriber Number would be as follows:

$$FN = \text{Railway Subscriber Number} + \text{Railway Access code}$$

Currently in a GSM network a calling subscriber uses a called subscribers Mobile Subscriber ISDN number (MSISDN) for call set-up purposes. This is used to route a call to a Gateway Mobile Switching Centre (GMSC) which interrogates the Home Location Register (HLR) for a routing number. The routing number returned by the HLR is used to route the call through the GSM network to the called subscriber.

The GSM-Railways requirement to use a Functional Number, which cannot be used for routing purposes, means that the originating switch must somehow use the called FN to obtain the called users MSISDN from a central functional register before it can set-up the call. It must also provide the calling FN to the access matrix for validation. Currently there is no standard architecture to do this or any mechanism to transport the called party FN and calling party FN to the access matrix function

The GSM-R solutions for allowing railway personnel to register and deregister FNs with the access matrix do not include any flexibility in the types of registration and deregistration available. Disadvantages of the current GSM-R solutions include the fact that there is no way of registering FNs for Fixed Line Directory Numbers (DN) and that the system does not allow de-registration to be performed from terminals other than the terminal used for registration. Further, the system does not include any extensibility, such that any future requirement for additional types of registration, interrogation or de-registration procedures would require significant software development.

European patent application publication EP 0 431 453 relates to a method for assigning dial numbers in a radio system comprising a central station and a plurality of subscribers selectively reachable through individual dial numbers.

## OBJECT OF THE INVENTION

The invention seeks to define an architecture to support the use of 'Functional Numbers' for addressing purposes within a wireless communication network, and provide a method for transporting 'Functional Numbers' between the relevant wireless communication entities within the architecture.

The invention also seeks to define a flexible and extendible encoding scheme for the GSM-R defined supplementary service handling operations used for registering, interrogating and deregistering FNs. In addition the invention provides an extension to the way Functional Numbers are registered and deregistered by providing an encoding for supervisory control of registration and deregistration procedures.

## STATEMENT OF THE INVENTION

In accordance with a first aspect of the invention, there is provided a method for a communication network operating in accordance with the GSM-R standard to provide call set up procedures as recited in claim 1.

Preferably the architecture defines an Intelligent Network (IN) architecture which sites the access matrix at a Service Control Point (SCP). Preferably transport of the FNs between the originating switch (i.e. GMSC) and the access matrix (sited at the SCP) is enabled by means of a user-user IE and a calling party sub-address parameter. The calling party subaddress could be provided by means of an Intelligent Network parameter.

The system could support an Unstructured Supplementary Service Data protocol and which would provide an encoding mechanism for supporting supplementary service handling operations which mechanism provides supervisory control.

In accordance with another aspect of the invention, there is provided, in or for a GSM-based telecommunications system comprising an architecture which employs an access matrix at a Service Control Point (SCP), a method of providing call set up procedures, the method comprising:

transporting FNs between an originating switch and the access matrix using a user-user information element and an calling party subaddress;

triggering information analysis on reaching the detection point;

routing and alerting in the network the originating basic call state machine the Initial detection point message between the GMSC and the SCP; and routing from the SCP to the GMSC a connect message when connection is possible. Preferably a release call message is issued when connection is not possible.

Preferably the method comprises the following procedures:

i. the deployment of standard GSM/ MORANE procedures used by the calling subscriber to originate a call;

ii. the deployment of standard GSM/ MORANE procedures used by MSC to accept the call set-up and invoke the originating basic call state machine;
wherein upon reaching Detection Point 3 in the originating basic call state machine, the following procedures are triggered:

iii. the transportation of called and calling functional number to the SCP;

iv. the transportation of successful or unsuccessful results back to the MSC
whereupon standard GSM/ MORANE procedures may be employed to continue using the returned data.

In accordance with a further aspect of the invention, there is provided a supervisory management registration class of GSM-R MSs operable in or for a GSM-based telecommunications system supporting an Unstructured Supplementary Service Data protocol to provide enhancement of the use of USSD strings for the registration, interrogation and deregistration operations, extensibility and introduction of new fields, wherein a user having such a supervisory management registration class is capable of registering and deregistering other users.

In accordance with a still further aspect of the invention, there is provided in or for a GSM-based telecommunications system comprising an architecture which employs an access matrix and utilises the GSM Unstructured Supplementary Service Data protocol, a flexible and extendible encoding scheme for the GSM-R defined supplementary service handling operations used for registering, interrogating and deregistering FNs. The encoding scheme introduces a number of fields for use in a USSD string: a first field indicating the general operation code (registration, interrogation and deregistration); a second field indicating the service code; a third field indicating the service type of the operation; and a fourth field indicating a list of parameters, wherein the third field parameters can be entered as a number between 1 and 9; and the fourth field parameters can vary for each string and operation. The field indicating the general operation code has two or three characters.

The two fields which describe an operation provide flexibility. If the operation service type was introduced at the very beginning, it could interfere with service codes other than the FM service, blocking some possibilities in the use of the operations. Different service codes (including GSM service codes) could be used with the general operations, without being excluded by a too specific operation which would block access to other services. To provide full flexibility in the use of the operations, the operation service type is preferably introduced after the service code field. A further field comprising a separation character (*) can be interposed between information fields.

Preferably, the GSM Unstructured Supplementary Service Data (USSD) protocol string comprises the following fields:

1. A first field indicating the general operation code (registration, interrogation and deregistration);

2. A service code ,

3. A separation character (*);

4. The service type of the operation,

5. A separation character (*);

6. A list of parameters for each string and operation;

7. An ending character (#).

The user who registers or de-registers other people than himself via Supervisor registration or Supervisor deregistration must use a mobile station that has a class of registration which reflects the supervisory management status. A class of registration (value "E") is provided which is a supervisor's registration/de-registration class.

In accordance with a further aspect of the invention, there is provided in or for a GSM-based telecommunications system comprising an architecture which utilises the GSM Unstructured Supplementary Service Data protocol, an encoding mechanism for supporting supplementary service handling operations which provide supervisory control for registration and deregistration procedures.

Preferably the supervisory handling operations include registration and deregistration of functional numbers of a user whereby the user can be associated and deregistered with respect to a MSISDN by a supervisor.

## BRIEF DESCRIPTION OF THE FIGURES

In order that the present invention can be more fully understood and to show how the same may be carried into effect, reference shall now be made, by way of example only, to the Figures as shown in the accompanying drawing sheets wherein:

Figure 1 shows the Functional Architecture of a GSM-R network
Figure 2 shows the Proposed GSM-R Architecture for the Invention
Figure 3 shows the Messages and Parameters used to transport FN's during call set-up.
Figure 4 shows the Four USSD strings used for the Follow Me service and their length limits.
Table A shows the parameters used in the transport of FNs across the network for each message involved in the process.
Table 1 shows the function of Class of registration.
Table 6 shows the possible USSD responses that may be provided in string 3 and string 4 applicable to Follow me, and also lists examples of the text messages that can be displayed on the MS once the translation of the outcome code has taken place in the MS.

Tables 2 - 15 (except Table 6) show the content of each string for each procedure.

## DETAILED DESCRIPTION OF THE PREFERRED EMBODIMENTS

There will now be described, by way of example, the best mode contemplated by the inventors for carrying out the invention. In the following description, numerous specific details are set out in order to provide a complete understanding of the present invention. It will be apparent, however, to those skilled in the art that the present invention may be put into practice with variations of the specific.

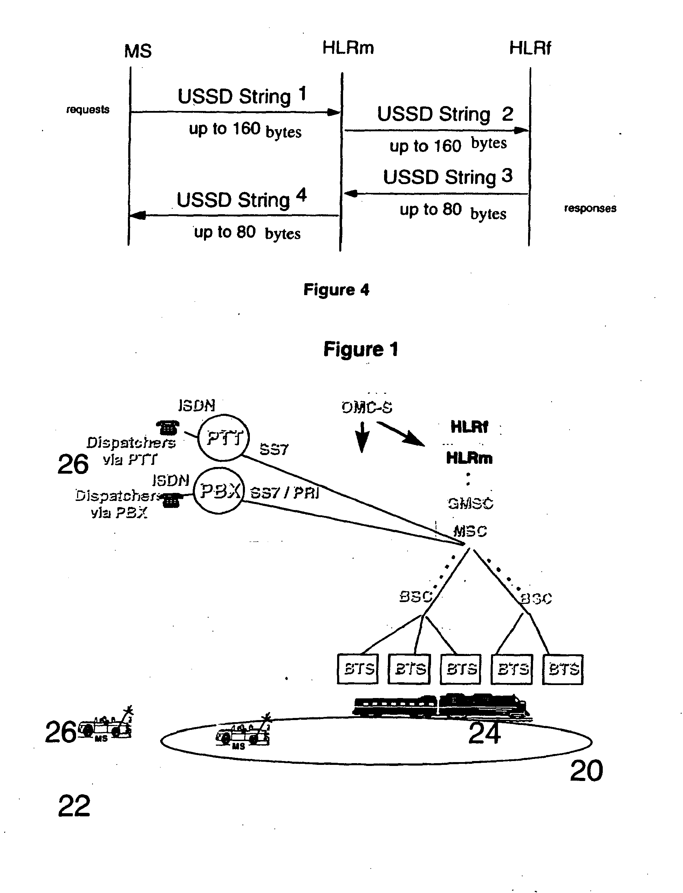

Figure 1 shows an overview of a GSM-Railways private network. The call area is indicated by the track 20 and outlying area 22, upon which track trains 24 operate in communication with GSM-R subscribers and dispatchers 26 (associated with both mobile and fixed stations) while in the coverage area of the GSM-R system.

Within GSM-R systems Functional Numbers (FNs) have been defined for identification and setting up communication between different GSM-R user types. An access matrix function has been defined (in the HLRf) to validate associations between FNs and specific MS equipment, and to control which user categories can call each other (MORANE SSRS A 04/02 T 6002). A service, called Follow Me, has been defined to enable GSM-R personnel to be contacted using a FN (rather then the telephone number of the MS they are using) and a way of registering and deregistering FNs in the HLRf from the MS has been defined in order for the service to activated or deactivated. However there is currently no standardised way for GSM-R systems to actually implement the access matrix function; there is no standardised mechanism to transport the called party FN and calling party FN to the access matrix function in order to be processed before a call set-up attempt is made; and lastly, there is no capability for supervisory registration/ deregistration of FNs in the access matrix.

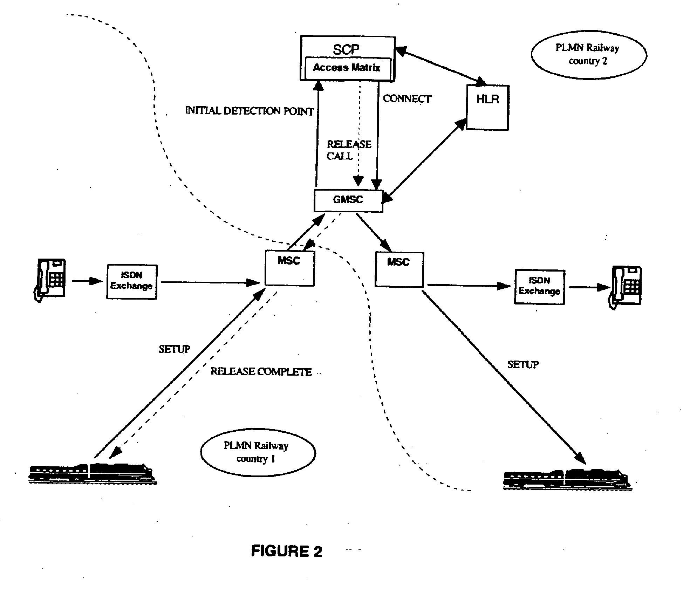

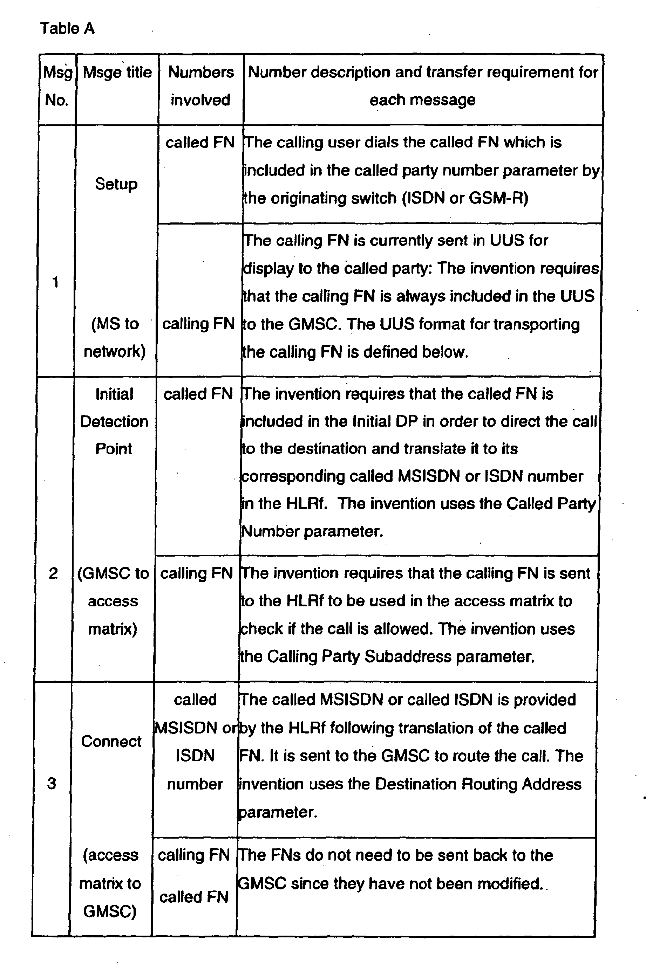

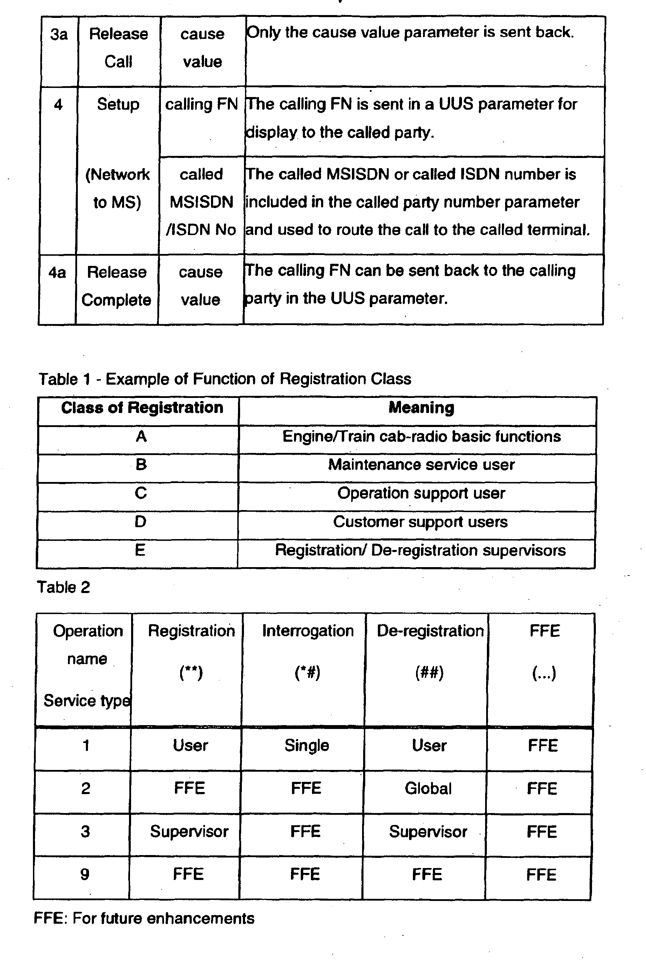

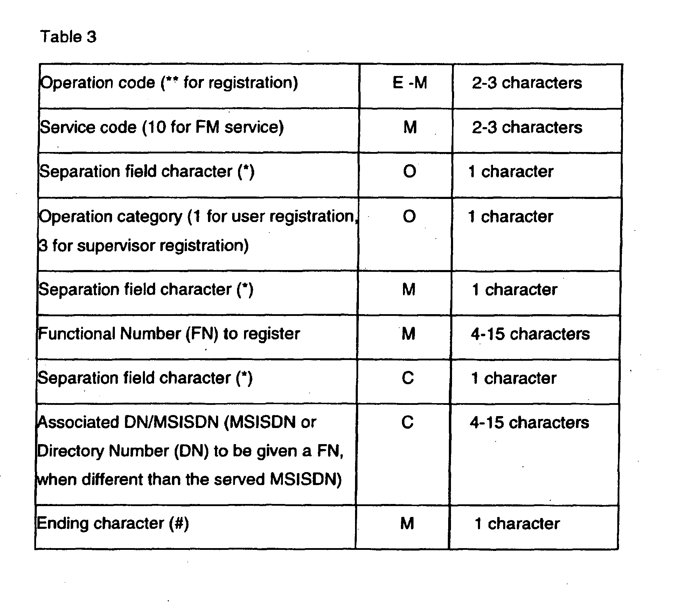

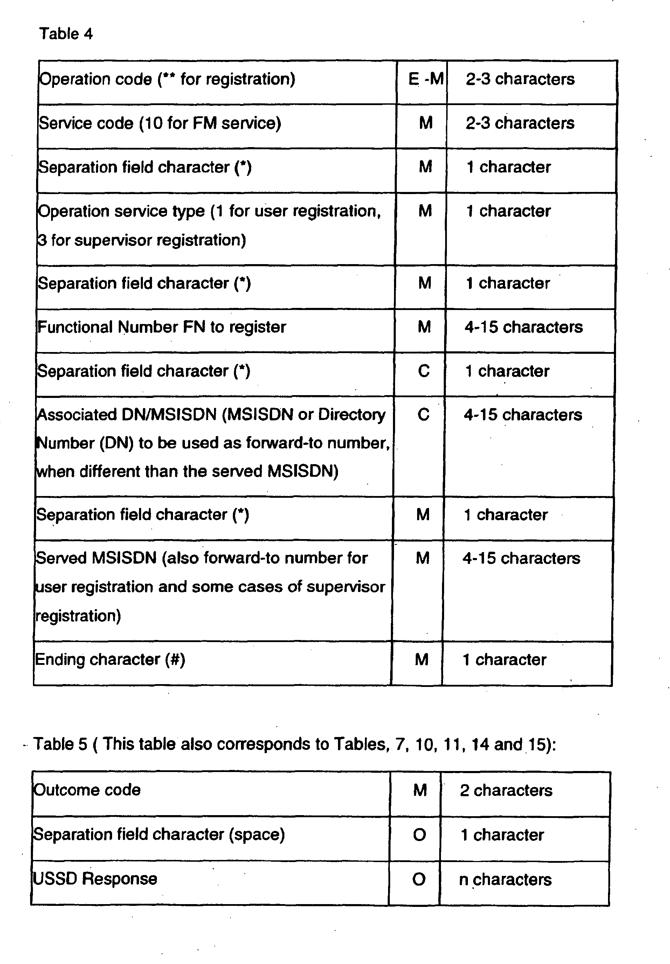

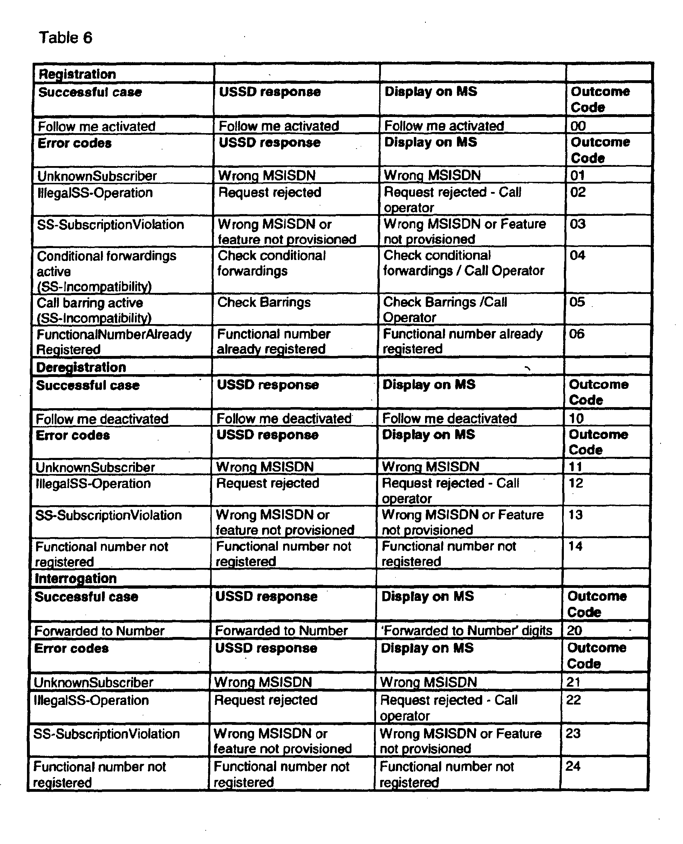

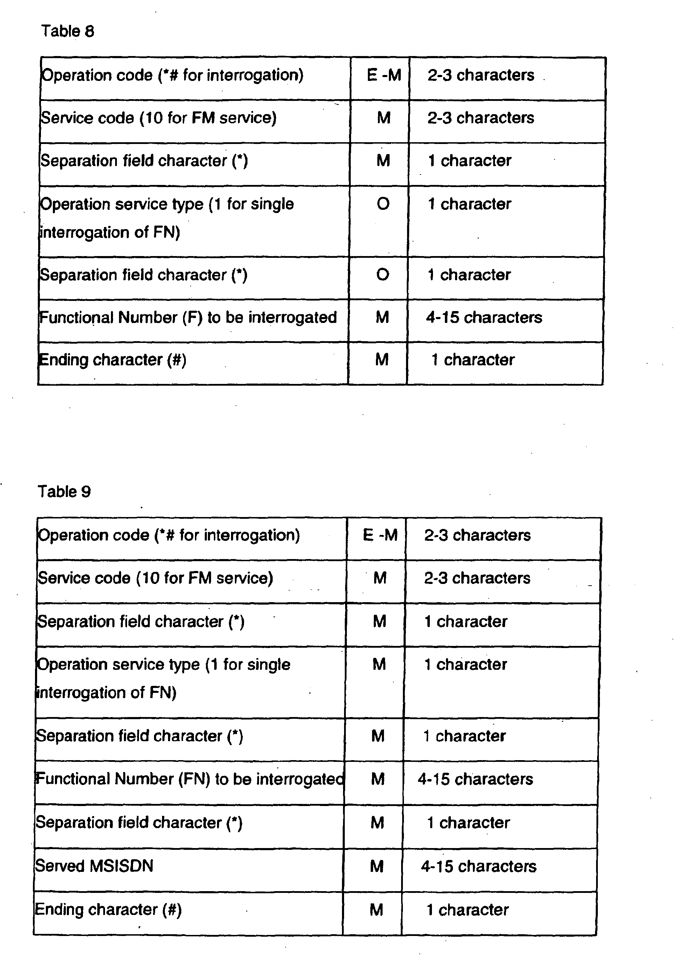

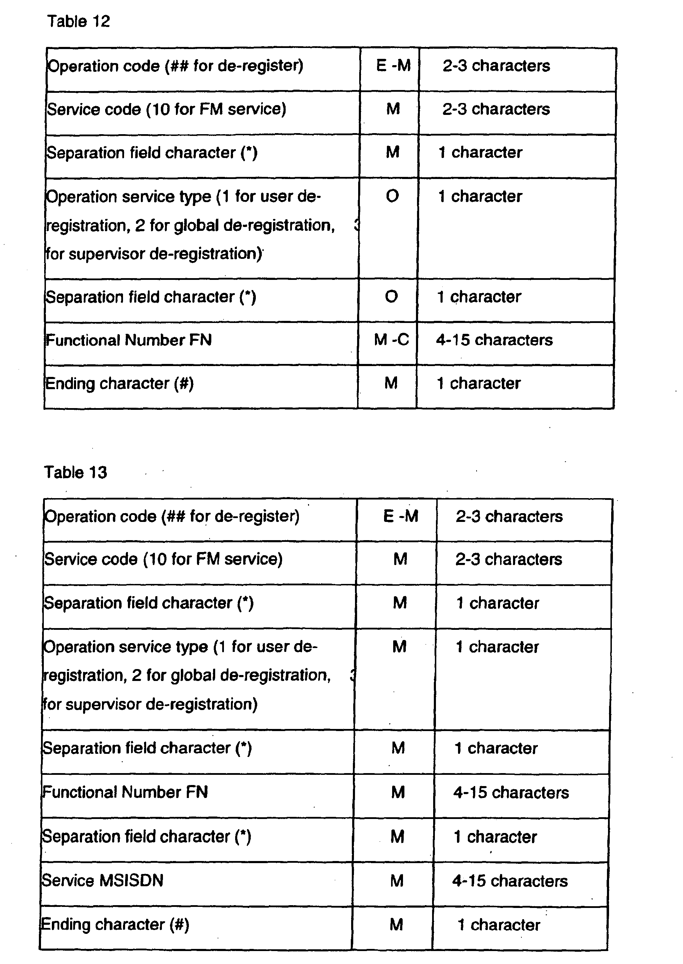

The first aspect of the invention (i.e. defining an architecture to support the use of FNs for addressing purposes) sites the HLRm and HLRf functions of a GSM-R system in the HLR and SCP network entities respectively (see Figure 2). The advantages of this solution include the technical benefits provided by IN, both for the initial implementation and any future extension/ enhancement.

Transport of the FNs between the originating switch (i.e. GMSC) and the access matrix (sited at the SCP) is triggered on reaching Detection Point 3 (Detection Point which analyses information before routing and alerting in the Intelligent Network) in the originating basic call state machine. The IN message used between the GMSC and the SCP is the Initial DP message, and from the SCP to the GMSC the Connect message is used in successful cases and the Release call message is used in unsuccessful cases (when the call will have been rejected as the result of the access matrix check).

The information flow for a call set-up is:

1. Standard GSM-R procedures used by the calling subscriber to originate a call

2. Standard GSM-R procedures used by GMSC to accept the call set-up and invoke the originating basic call state machine.

3. Invention triggered on reaching Detection Point 3 in the originating basic call state machine.

4. Invention transports called and calling functional number to the SCP.

5. Invention transports successful or unsuccessful results back to the MSC.

6. Standard GSM/ MORANE procedures continue using the returned data (i.e. continue with call set-up or fail the call attempt).

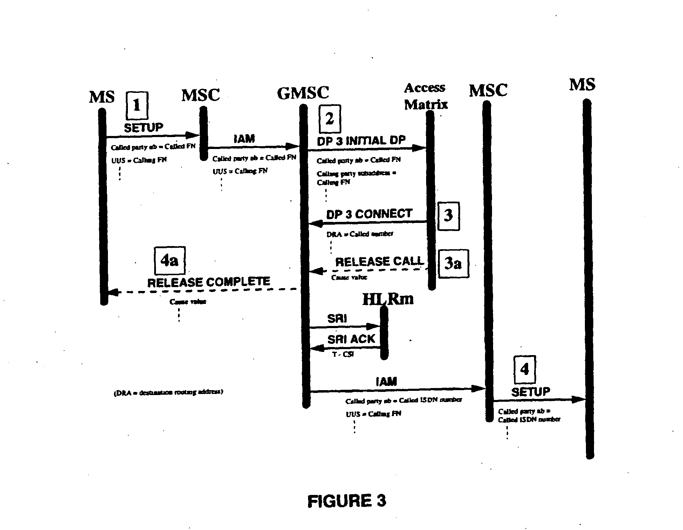

The second aspect of the invention (i.e. providing a method for transporting FNs between network entities) utilises the ISDN and GSM User-to-User Signalling Service, and the ITU IN protocol. The following table and information flow diagram (Figure 3) show how the FNs are obtained and transported to and from the access matrix during the GSM-R call set-up procedure:

The third aspect of the invention (i.e. extending the USSD encoding to provide flexibility for GSM-R defined supplementary service handling operations used for registering, interrogating and deregistering FNs) defines a range of fields for use in a USSD string (Table 2). This range of fields and the encoding used provides a flexible and extendible mechanism to support the registration, interrogation and de-registration operations and any future operations which may be required. The following fields are defined: (Note: fields 1-3 existing, fields 4 & 6 part of the invention)

1. The general operation code (registration, interrogation and deregistration);

2. The service code (which can be FM or another service);

3. A separation character (*);

4. The service type of the operation (entered as a number between 1 and 9);

5. A separation character (*);

6. List of parameters (a variable dependent upon string type and operation - see tables later);

7. Ending character (#).

The aim of the two fields which describe an operation (1 and 4) is to introduce flexibility. If the operation service type was introduced at the very beginning, it could interfere with service codes other than the FM service, blocking some possibilities in the use of the operations. Different service codes (including GSM service codes) could be used with the general operations, without being excluded by a too specific operation which would block access to other services. To provide full flexibility in the use of the operations, the operation service type is preferably introduced after the service code field.

No separation field between the operation code and the service code is required because the operation code will always be a combination of * and #, thus the first number of the service code determines the end of the operation code. Between the other fields a separation character can be inserted to comply with GSM 02.90 (USSD) and GSM 02.30 (MMI) and is also a more user friendly way to key in the commands by the user.

The first field, Operation, has two or three characters and allows for future creation of operations, combining * and # over three characters.

The fourth aspect of the invention (i.e. providing a solution for supervisory control of FN registration and de-registration procedures) defines a new MS Registration Class of 'E' (registration/ deregistration supervisors) which is stored in the HLRm (see Table 1) and checked on receipt of a registration/deregistration request which includes a 'supervisor' category code.

In the table section, showing the format and content of USSD strings for each of the supplementary service operations (registration, interrogation, and de-registration) are given. The table notation is:

M for fields which are mandatory for the execution of the operation.

O for fields which are optional for the execution of the operation.

C for fields which are conditional for the execution of the operation and will be detailed in a note wherever used.

E for fields which show when extensibility is being proposed, so that there is no barrier for future enhancement, for instance: the creation of new service type for the operations.

An example will be given for each of the 4 strings used to perform an operation (see Figure 4).
Table 3 shows a proposed registration USSD string 1 content (MS to HLRm).
Examples of string 1 registration follow:

* *10*88824567890101# => A user registers FN 888 2 45678901 01 against the MSISDN he is using, without service type indication.

* *10*1*88824567890101# => A user registers his own FN against the MSISDN he is using with service type indication.

* *10*888965432*33329450532#
User registers controller1 with FN 888 9 6543 2 against DN 33 329 450532 (without category indication). This is allowed only if registration is activated from a MS with class of registration E.

* *10*3*888965432*33329450532# (supervisor registration)

From his MS a user registers controller1 with Functional Number 888 9 6543 2 against a fixed line terminal with DN = 33 329 450532 (with category indication). The MS used to request the registration must have class of registration E.

Table 4 shows a registration USSD string 2 content (HLRm to HLRf), examples of such being:

**10*1*88824567890101*44802567123# => A user registers FN 888 2 45678901 01 against the MSISDN he is using and the served/ associated MSISDN is transferred to the HLRf:

**10*3*33329450532*88824567890133*44802567123# => Supervisor registration: From his MS, a user registers FN 888 2 45678901 33 against his fixed line colleague with DN = 33 329 450532, using an MS with the served MSISDN 44 802 567123.

Tables 5 and 7 show a proposed registration USSD strings 3 and 4 contents (HLRf to HLRm, followed by HLRm - MS). Examples of which are:

00 (space) USSDResponse. => Successful registration. In a successful case, a message may optionally be sent inside the USSDresponse field, such as 'registered'.

06 (space) USSDResponse. => Unsuccessful registration.

For the case where the FN is already registered, the message 'already registered' may be sent to the MS

It is the MS role to translate the outcome code into the appropriate message to be displayed on the handset screen. Some examples of messages that can be displayed are shown in Table 6.

## Interrogation

Interrogation of a single FN is performed to obtain its associated MSISDN/DN (for fixed terminals).

Table 8 shows a proposed interrogation USSD string 1 content (MS to HLRm), an example of which is:

* #10*/1/*77729876543210# => User interrogates driver2's FN (777 2 98765432 10). /* is optional.

Table 9 shows a proposed interrogation USSD string 2 content (HLRm to HLRf), an example of which is:

* #10*1*77729876543210*44802567123# => User on MSISDN 44 802 567 123 interrogates FN 777 2 98765432 10.

Tables 10 and 11 show a proposed interrogation USSD strings 3 and 4 contents (HLRf to HLRm, followed by HLRm - MS). Examples of which are:

20 (space) USSDResponse. => Successful interrogation. In a successful case, a message may optionally be sent inside the USSDresponse field as well as the result itself of the interrogation (i.e. the forwarded to number associated with the FN).

24 (space) USSDResponse. => Unsuccessful interrogation.

For the case where the FN is not registered, the message 'FN not registered' may optionally be sent to the MS.

It is the MS role to translate the outcome code into the appropriate message to be displayed on the handset screen. Some examples of messages that can be displayed are shown in Table 6.

The associated MSISDN/ DN is then forwarded to number to which the FN being interrogated in registered to and is not to be confused with the served MSISDN from where the interrogation is performed. The interrogation response is conditional, it is not mandatory when interrogation cannot be activated (there is an error), but it is mandatory when interrogation has been activated i.e. the MSISDN corresponding to the FN interrogated must be included in response string 4.

## De-registration

Currently MORANE describes the following de-registration: the user deregisters his own FN using the MS which was used to register the FN. This is the first optional service type: user de-registration. Greater variety and flexibility to de-registration is possible, allowing a user to de-register another user within GSM-R or all users of the same train at the same time.

The person performing de-registration on others' FNs must be entitled to do so, and his identity and eligibility for de-registration (supervisor and global) should be checked in the HLRm where the class of registration check will take place. A new class of de-registration "E" is introduced for supervisory management status.

Three optional service types for de-registration are possible: User Deregistration : Single FN de-registration activated from the MS associated with the FN to be de-registered. Global De-registration : De-registration of all FNs of one train from a MS with class of registration E. Supervisor Deregistration : De-registration of FN(s) from a MS with class E registration.

The service types are optional as some operators may not wish to use them, but they are created to bring more variety and flexibility to the de-registration operation. When service types are not used, de-registration entitlement will be checked by the class of registration check at the HLRm and the FN - MSISDN association check at the HLRf. When service types are used they limit the use of de-registration, which makes all the possibilities for de-registration less ambiguous to use.

Table 12 shows a proposed de-registration USSD string 1 content (MS to HLRm), examples of which are:

##10*88824567890101# => Without any service type indication, this command means that the user wants to de-register FN 88824567890101. If the FN is associated with the MS activating de-registration, de-registration of the user is performed: if this FN is a lead train driver's FN, all the MSs on the train will be de-registered at the same time: If the FN is not associated with the MS activating de-registration, de-registration of the FN (and all other FNs on the train if the MS is that of, for example, the lead train driver's FN ) is only possible if the MS has a registration class E.

##10*1*88824567890101# => User de-registration: With a service type 1 command the user can de-register only himself (even if it is a lead train driver's FN), the FN needs to be his own FN associated with the MS on which he is activating the de-registration.

##10*2*88824567890101# => Global de-registration: With a service type 2 command the user can de-register everybody on the train who has the same running number as the lead train driver (45678901). If the FN is associated with the MS activating de-registration is a lead train driver's FN, all the MSs on the train will be de-registered at the same time i.e. global de-registration can be performed. If the FN is not associated with the MS activating de-registration, then global de-registration can only performed if the MS has a registration class E.

##10*3*77729876543210# => Supervisor de-registration: With a service type 3 command the user can register only one other user. The MS activating supervisor de-registration must have a registration class E.

Note: this will de-register ONLY FN 777 2 98765432 10 (even if it is a lead train driver's FN). Global de-registration by a supervisor shall be done using category 2, or with no category indication.

The person who wants to de-register other users will be recognised by his MSISDN and the class of registration it carries. The HLRm will determine if the person requesting global or supervisor de-registration is entitled to activate it, checking the class of registration (users with the class E registration will be allowed to activate de-registration). For user de-registration, the FN entered here is the FN of the user who wants to de-register himself. For supervisor de-registration, the FN entered here is the FN of the other person that the user wants to de-register. For global de-registration, the FN entered here is the lead train driver's FN, as the train driver FN always contains the running number which will be used to apply global de-registration on every FN carrying the same RN as the driver.

Table 13 shows a proposed de-registration USSD string 2 content (HLRm to HLRf), examples of which are:

##10*1*88824567890101*44802567123# => User de-registration: In the case that a user with MSISDN 44 802 0567123 wants to de-register himself only and his MSISDN is sent to the HLRf, then this string applies.

##10*2*88824567890101*44802567123# => Global de-registration: If the user wants to de-register everybody registered on the train with running number 45678901 and his MSISDN is sent to the HLRf, then this string applies.

##10*3*77729876543210*44802567123# => Supervisor de-registration: If the user wants to de-register only driver2 on train 98765432 and his MSISDN is sent to the HLRf, then this string applies.

Tables 14 and 15 show a proposed de-registration USSD strings 3 and 4 contents (HLRf to HLRm, followed by HLRm - MS). Examples of which are:

10 (space) USSDResponse. => Successful de-registration. In a successful case, a message may optionally be sent inside the USSDresponse field, such as 'deregistered'.

User de-registration: A user can de-register himself. The de-registration can be carried out by service type 1 in string 1, or without the service type indication. In the latter case, either the FN is associated with an MS capable of activating de-registration or if the FN is not associated with the MS activating de-registration and the MS has a registration class E, e.g. for arbitrary FN.

Global de-registration: A user can de-register FN 888 2 45678901 01 and all FNs on the same train with running number 45678901. The de-registration could be achieved with service type 2 in string 1, or without the service type indication. In the latter case, either the FN is associated with an MS capable of activating de-registration or if the FN is not associated with an MS capable of activating de-registration and the MS has a registration class E.

Supervisor de-registration: User can de-register driver2 only on other train. The de-registration can be carried out with service type 3 in String 1 or with no service type indication. In both cases the MS must have a registration class E.

14 (space) USSDResponse. => Unsuccessful de-registration.

For the case where the FN is not registered, the message 'FN not registered' may be sent to the MS

It is the MS role to translate the outcome code into the appropriate message to be displayed on the handset screen. Some examples of messages that can be displayed are shown in Table 6.

**Claims**

1. A method of initiating a call between a calling communication device and a called communication device in a communication network operating in accordance with the GSM-R standard, the communication network comprising at least one switch (GMSC) for handling messages and a node (SCP) having access to an access matrix arranged for storing associations between functional numbers and specific communication devices, the functional numbers reflecting functional information being used for enabling communication between communication devices, the method comprising:

   - an originating switch (GMSC) receiving (1) a first call setup message from the calling communication device, the first call setup message comprising a functional number of the calling communication device;
   - the originating switch (GMSC) sending (2) the functional number of the calling communication device to the node (SCP) of the communication network to determine whether a call is allowed using the access matrix;
   - the originating switch (GMSC) receiving (3) a connect message from the node indicating that the call is allowed; and
   - the originating switch (GMSC) sending (4) a second call setup message to the called communication device, the second setup message comprising the functional number of the calling communication device;

   wherein the functional number of the calling communication device is sent to the node using a user-to-user information element.

2. The method according to claim 1, wherein the first and second setup messages further comprise the functional number of the called communication device.

3. The method according to any of the preceding claims, wherein the method further comprises the originating switch (GMSC) sending (2) a functional number of the called communication device to the node (SCP) to direct the call to a destination and to translate it to its corresponding called mobile station integrated services digital network number.

4. The method according to any of the preceding claims, wherein the functional number of the calling communication device is sent in the first call setup and second call setup messages in a GSM user-to-user signalling service parameter.

5. The method according to any one of the preceding claims, wherein the method further comprises providing supplementary service supervisory handling operations comprising registration and deregistration of functional numbers.

6. The method according to claim 5, wherein the supervisory handling is done by means of an unstructured supplementary service data protocol.

7. The method according to claim 6, wherein an encoding scheme is provided to be applied to the unstructured supplementary service data protocol and where the encoding scheme introduces a number of fields for use in a unstructured supplementary service data protocol string: a first field indicating a general operation code, a second field indicating a service code, a third field indicating a service type of the operation, a fourth field indicating a list of parameters.

8. The method according to claim 7, wherein the second and third fields and the third and fourth fields are separated by an asterisk * and after the fourth field there is an ending character #.

9. The method of claim 5, wherein the registration and deregistration is done with respect to a mobile station integrated services digital network number by a supervisor.

10. The method according to claim 9, wherein the supervisor is provided with a supervisory management registration class for supporting unstructured supplementary service data protocol to provide enhancement of the use of unstructured supplementary service data strings for registration, interrogation and deregistration.

11. The method according to any one of claims 1-4, wherein the functional number of the calling communication device is sent to the node in an initial detection point message, and wherein the transfer of the functional number is enabled by means of a user-to-user information element and calling party subaddress.

12. The method according to claim 11, wherein the calling party subaddress is provided by means of an intelligent network parameter.

13. The method according to any of the preceding claims, wherein the node (SCP) is a service control point of an intelligent network.

14. A mobile switching centre (GMSC) for a GSM-R network, the mobile switching centre (GMSC) being arranged to handle call setup signalling between a calling communication device and a called communication device in the GSM-R network, the network comprising a node (SCP) having access to an access matrix for storing associations between functional numbers and specific communication devices, the functional numbers reflecting functional information being used for enabling communication between communication devices, the mobile switching centre (GMSC) comprising means for:

  - receiving a first call setup message from the calling communication device, the first call setup message comprising a functional number of the calling communication device;
  - sending the functional number of the calling communication device to the node (SCP) of the communication network to determine whether a call is allowed using the access matrix;
  - receiving a connect message from the node (SCP) indicating that the call is allowed; and
  - sending a second call setup message to the called communication device, the second setup message comprising the functional number of the calling communication device;

wherein the functional number of the calling communication device is sent to the node by using a user-to-user information element.

15. The mobile switching centre (GMSC) according to claim 14 further comprises means for receiving a release call message from the node indicating that the call is not allowed.

16. A node (SCP) for a GSM-R network capable of handling call setup signalling between a calling communication device and a called communication device in the GSM-R network, the node having access to an access matrix being capable of storing associations between functional numbers and specific communication devices, the functional numbers reflecting functional information being used for enabling communication between communication devices, the network comprising at least one switch (GMSC) for handling messages, the node (SCP) comprising means for:

  - receiving a call setup request from the switch (GMSC), the request comprising the functional number of the calling communication device;
  - determining based on the received request by using the access matrix whether the call is allowed; and
  - sending, upon determining that the call is allowed, a connect message to the switch (GMSC);

wherein the functional number of the calling communication device is received in a user-to-user information element.

17. A GSM-R network comprising the mobile switching centre (GMSC) according to claim 14 and the node (SCP) according to claim 16.

**Patentansprüche**

1. Verfahren zum Initiieren eines Rufs zwischen einer rufenden Kommunikationsvorrichtung und einer gerufenen Kommunikationsvorrichtung in einem Kommunikationsnetz, welches gemäß dem GSM-R-Standard arbeitet, wobei das Kommunikationsnetz zumindest einen Schalter (GMSC) zum Handhaben von Nachrichten und einen Knoten (SCP) mit einem Zugriff auf eine Zugriffsmatrix aufweist, welche zum Speichern von Assoziationen zwischen funktionalen Nummern und bestimmten Kommunikationsvorrichtungen angeordnet ist, wobei die funktionalen Nummern funktionale Informationen wiedergeben, welche zum Ermöglichen einer Kommunikation zwischen Kommunikationsvorrichtungen verwendet werden, wobei das Verfahren Folgendes aufweist:

   - einen Ursprungsschalter (GMSC), welcher eine erste Rufaufbaunachricht von der rufenden Kommunikationsvorrichtung empfängt (1), wobei die erste Rufaufbaunachricht eine funktionale Nummer der rufenden Kommunikationsvorrichtung aufweist;
   - den Ursprungsschalter (GMSC), welcher die funktionale Nummer der rufenden Kommunikationsvorrichtung zum Knoten (SCP) des Kommunikationsnetzes sendet (2), um unter Verwendung der Zugriffsmatrix zu bestimmen, ob ein Ruf zugelassen wird;
   - den Ursprungsschalter (GMSC), welcher eine Verbindungsnachricht von dem Knoten empfängt (3), welche angibt, dass der Ruf zugelassen wird; und
   - den Ursprungsschalter (GMSC), welcher eine zweite Rufaufbaunachricht zu der gerufenen Kommunikationsvorrichtung sendet (4), wobei die zweite Aufbaunachricht die funktionale Nummer der rufenden Kommunikationsvorrichtung aufweist;

   wobei die funktionale Nummer der rufenden Kommunikationsvorrichtung unter Verwendung eines Teilnehmer-zu-Teilnehmer-Informationselementes zu dem Knoten gesendet wird.

2. Verfahren nach Anspruch 1, wobei die erste und zweite Aufbaunachricht zudem die funktionale Nummer der gerufenen Kommunikationsvorrichtung aufweisen.

3. Verfahren nach einem der vorangehenden Ansprüche, wobei das Verfahren zudem den Ursprungsschalter (GMSC) aufweist, welcher eine funktionale Nummer der gerufenen Kommunikationsvorrichtung zum Knoten (SCP) sendet (2), um den Ruf zu einer Zieladresse zu leiten und denselben in die entsprechende gerufene Nummer des Mobiltelefon-ISDN-Netzes desselben zu übersetzen bzw. umzuwandeln.

4. Verfahren nach einem der vorangehenden Ansprüche, wobei die funktionale Nummer der rufenden Kommunikationsvorrichtung in der ersten und zweiten Rufaufbaunachricht in einem Parameter des GSM-Teilnehmer-zu-Teilnehmer-Zeichengabedienstes gesendet wird.

5. Verfahren nach einem der vorangehenden Ansprüche, wobei das Verfahren zudem das Liefern von Zusatzdienst-Überwachungshandhabungsoperationen aufweist, welche die Registrierung und Abmeldung der funktionalen Nummern aufweisen.

6. Verfahren nach Anspruch 5, wobei die Überwachungshandhabung mittels eines Unstructured-Supplementary-Service-Data-Protokolls bzw. USSD-Protokolls erfolgt.

7. Verfahren nach Anspruch 6, wobei ein Codierschema vorgesehen ist, um auf das USSD-Protokoll angewendet zu werden, und wobei das Codierschema eine Anzahl von Feldern zur Verwendung in einer USSD-Protokollfolge einführt: ein erstes Feld, welches einen allgemeinen Betriebscode angibt, ein zweites Feld, welches einen Dienstcode angibt, ein drittes Feld, welches eine Dienstart des Betriebs angibt, ein viertes Feld, welches eine Liste der Parameter angibt.

8. Verfahren nach Anspruch 7, wobei das zweite und dritte Feld und das dritte und vierte Feld durch ein Sternchen * getrennt sind und es nach dem vierten Feld ein Endkennzeichen # gibt.

9. Verfahren nach Anspruch 5, wobei die Registrierung und Abmeldung in Bezug auf eine Nummer des Mobiltelefon-ISDN-Netzes durch einen Supervisor bzw. eine Überwachungseinrichtung erfolgt.

10. Verfahren nach Anspruch 9, wobei die Überwachungseinrichtung mit einer Überwachungsverwaltungs-Registrierungsklasse zum Unterstützen des USSD-Protokolls versehen ist, um eine Verbesserung der Verwendung der USSD-Folgen zur Registrierung, Abfrage und Abmeldung zu liefern.

11. Verfahren nach einem der Ansprüche 1-4, wobei die funktionale Nummer der rufenden Kommunikationsvorrichtung in einer Anfangserfassungspunktnachricht an den Knoten gesendet wird und wobei die Übertragung der funktionalen Nummer mittels eines Teilnehmer-zu-Teilnehmer-Informationselementes und einer Unteradresse der rufenden Partei ermöglicht wird.

12. Verfahren nach Anspruch 11, wobei die Unteradresse der rufenden Partei mittels eines Parameters eines intelligenten Netzes geliefert wird.

13. Verfahren nach einem der vorangehenden Ansprüche, wobei der Knoten (SCP) ein Service Control Point bzw. eine Dienststeuerungsstelle eines intelligenten Netzes ist.

14. Mobilfunkvermittlungsstelle (GMSC) für ein GSM-R-Netz,
wobei die Mobilfunkvermittlungsstelle (GMSC) zum Handhaben der Rufaufbauzeichengabe zwischen einer rufenden Kommunikationsvorrichtung und einer gerufenen Kommunikationsvorrichtung im GSM-R-Netz angeordnet ist, wobei das Netz einen Knoten (SCP) mit einem Zugriff auf eine Zugriffsmatrix zum Speichern von Assoziationen zwischen funktionalen Nummern und bestimmten Kommunikationsvorrichtungen aufweist, die funktionalen Nummern funktionale Informationen wiedergeben, welche zum Ermöglichen der Kommunikation zwischen Kommunikationsvorrichtungen verwendet werden, und die Mobilfunkvermittlungsstelle (GMSC) eine Einrichtung für Folgendes aufweist:

- Empfangen einer ersten Rufaufbaunachricht von der rufenden Kommunikationsvorrichtung, wobei die erste Rufaufbaunachricht eine funktionale Nummer der rufenden Kommunikationsvorrichtung aufweist;
- Senden der funktionalen Nummer der rufenden Kommunikationsvorrichtung zum Knoten (SCP) des Kommunikationsnetzes, um unter Verwendung der Zugriffsmatrix zu bestimmen, ob ein Ruf zugelassen wird;
- Empfangen einer Verbindungsnachricht von dem Knoten (SCP), welche angibt, dass der Ruf zugelassen wird; und
- Senden einer zweiten Rufaufbaunachricht zu der gerufenen Kommunikationsvorrichtung, wobei die zweite Aufbaunachricht die funktionale Nummer der rufenden Kommunikationsvorrichtung aufweist;

wobei die funktionale Nummer der rufenden Kommunikationsvorrichtung unter Verwendung eines Teilnehmer-zu-Teilnehmer-Informationselementes zu dem Knoten gesendet wird.

15. Mobilfunkvermittlungsstelle (GMSC) nach Anspruch 14, welche zudem eine Einrichtung zum Empfangen einer Auslöserufnachricht (release call message) von dem Knoten aufweist, welche angibt, dass der Ruf nicht zugelassen wird.

16. Knoten (SCP) für ein GSM-R-Netz, welcher zum Handhaben einer Rufaufbauzeichengabe zwischen einer rufenden Kommunikationsvorrichtung und einer gerufenen Kommunikationsvorrichtung im GSM-R-Netz fähig ist, wobei der Knoten Zugriff auf eine Zugriffsmatrix hat, welche zum Speichern von Assoziationen zwischen funktionalen Nummern und bestimmten Kommunikationsvorrichtungen fähig ist, die funktionalen Nummern funktionale Informationen wiedergeben, welche zum Ermöglichen einer Kommunikation zwischen Kommunikationsvorrichtungen verwendet werden, das Netz zumindest einen Schalter (GMSC) zum Handhaben von Nachrichten aufweist und der Knoten (SCP) Einrichtungen für Folgendes aufweist:

- Empfangen einer Rufaufbauanforderung vom Schalter (GMSC),

wobei die Anforderung die funktionale Nummer der rufenden Kommunikationsvorrichtung aufweist;

- Bestimmen, ob der Ruf zugelassen wird, basierend auf der empfangenen Anforderung durch Verwenden der Zugriffsmatrix; und
- nach dem Bestimmen, dass der Ruf zugelassen wird, Senden einer Verbindungsnachricht zum Schalter (GMSC);

wobei die funktionale Nummer der rufenden Kommunikationsvorrichtung in einem Teilnehmer-zu-Teilnehmer-Informationselement empfangen wird.

17. GSM-R-Netz mit der Mobilfunkvermittlungsstelle (GMSC) nach Anspruch 14 und dem Knoten (SCP) nach Anspruch 16.

**Revendications**

1. Procédé consistant à amorcer un appel entre un dispositif de communication appelant et un dispositif de communication appelé dans un réseau de communication fonctionnant selon la norme GSM-R, le réseau de communication comprenant au moins un commutateur (GMSC) pour traiter des messages et un noeud (SCP) ayant accès à une matrice d'accès agencée pour stocker des associations entre des numéros fonctionnels et des dispositifs de communication spécifiques, les numéros fonctionnels reflétant des informations fonctionnelles utilisées pour permettre la communication entre des dispositifs de communication, le procédé comprenant .

   - un commutateur de départ (GMSC) recevant (1) un premier message d'établissement d'appel en provenance du dispositif de communication appelant, le premier message d'établissement d'appel comprenant un numéro fonctionnel du dispositif de communication appelant ;
   - le commutateur de départ (GMSC) envoyant (2) le nombre fonctionnel du dispositif de communication appelant au noeud (SCP) du réseau de communication pour déterminer si un appel est autorisé en utilisant la matrice d'accès ;
   - le commutateur de départ (GMSC) recevant (3) un message de connexion en provenance du noeud indiquant que l'appel est autorisé ; et
   - le commutateur de départ (GMSC) envoyant (4) un second message d'établissement d'appel au dispositif de communication appelé, le second message d'établissement comprenant le numéro fonctionnel du dispositif de communication appelant ;

   dans lequel le numéro fonctionnel du dispositif de communication appelant est envoyé au noeud en utilisant un élément d'information d'utilisateur à utilisateur.

2. Procédé selon la revendication 1, dans lequel les premier et second messages d'établissement comprennent en outre le numéro fonctionnel du dispositif de communication appelé.

3. Procédé selon l'une quelconque des revendications précédentes, dans lequel le procédé comprend en outre le commutateur de départ (GMSC) envoyant (2) un numéro fonctionnel du dispositif de communication appelé au noeud (SCP) pour diriger l'appel vers une destination et pour le traduire en son numéro correspondant de Réseaux Numériques à Intégration de Services de station mobile appelée.

4. Procédé selon l'une quelconque des revendications précédentes, dans lequel le numéro fonctionnel du dispositif de communication appelant est envoyé dans le premier message d'établissement d'appel et dans le second message d'établissement d'appel dans un paramètre de service de signalisation d'utilisateur à utilisateur GSM.

5. Procédé selon l'une quelconque des revendications précédentes, dans lequel le procédé comprend en outre la fourniture d'opérations de traitement de surveillance de service supplémentaire comprenant l'enregistrement et l'annulation d'enregistrement de numéros fonctionnels.

6. Procédé selon la revendication 5, dans lequel le traitement de surveillance est effectué au moyen d'un protocole de données de service supplémentaire non structuré.

7. Procédé selon la revendication 6, dans lequel on prévoit un système de codage à appliquer au protocole de données de service supplémentaire non structuré et où le système de codage introduit un certain nombre de champs à utiliser dans une chaîne de protocole de données de service supplémentaire non structuré : un premier champ indiquant un code d'opération globale, un deuxième champ indiquant un code de service, un troisième champ indiquant un type de service de l'opération, un quatrième champ indiquant une liste de paramètres.

8. Procédé selon la revendication 7, dans lequel les deuxième et troisième champs et les troisième et quatrième champs sont séparés par un astérisque * et après le quatrième champ il y a un caractère de fin #.

9. Procédé selon la revendication 5, dans lequel l'enregistrement et l'annulation d'enregistrement sont effectués en ce qui concerne un numéro de Réseaux Numériques à Intégration de Services de station mobile par un superviseur.

10. Procédé selon la revendication 9, dans lequel le superviseur est muni d'une classe d'enregistrement de gestion de surveillance pour supporter un protocole de données de service supplémentaire non structuré pour procurer une amélioration de l'utilisation de chaînes de données de service supplémentaire non structuré pour l'enregistrement, l'interrogation et l'annulation d'enregistrement.

11. Procédé selon l'une quelconque des revendications 1 à 4, dans lequel le numéro fonctionnel du dispositif de communication appelant est envoyé au noeud dans un message de point de détection initial, et dans lequel le transfert du numéro fonctionnel est validé au moyen d'un élément d'information d'utilisateur à utilisateur et d'une adresse secondaire de correspondant appelant.

12. Procédé selon la revendication 11, dans lequel l'adresse secondaire de correspondant appelant est fournie au moyen d'un paramètre de réseau intelligent.

13. Procédé selon l'une quelconque des revendications précédentes, dans lequel le noeud (SCP) est un point de commande de service d'un réseau intelligent.

14. Centre de commutation mobile (GMSC) pour un réseau GSM-R, le centre de commutation mobile (GMSC) étant agencé pour traiter la signalisation d'établissement d'appel entre un dispositif de communication appelant et un dispositif de communication appelé dans le réseau GSM-R, le réseau comprenant un noeud (SCP) ayant accès à une matrice d'accès pour stocker des associations entre des numéros fonctionnels et des dispositifs de communication spécifiques, les numéros fonctionnels reflétant des informations fonctionnelles utilisées pour permettre la communication entre des dispositifs de communication, le centre de commutation mobile (GMSC) comprenant des moyens pour :

- recevoir un premier message d'établissement d'appel en provenance du dispositif de communication appelant, le premier message d'établissement d'appel comprenant un numéro fonctionnel du dispositif de communication appelant ;
- envoyer le numéro fonctionnel du dispositif de communication appelant au noeud (SCP) du réseau de communication pour déterminer si un appel est autorisé en utilisant la matrice d'accès ;
- recevoir un message de connexion en provenance du noeud (SCP) indiquant que l'appel est autorisé ; et
- envoyer un second message d'établissement d'appel au dispositif de communication appelé, le second message d'établissement comprenant le numéro fonctionnel du dispositif de communication appelant ;

dans lequel le numéro fonctionnel du dispositif de communication appelant est envoyé au noeud en utilisant un élément d'information d'utilisateur à utilisateur.

15. Centre de commutation mobile (GMSC) selon la revendication 14, comprenant en outre un moyen pour recevoir un message de libération d'appel en provenance du noeud indiquant que l'appel n'est pas autorisé.

16. Noeud (SCP) pour un réseau GSM-R susceptible de traiter une signalisation d'établissement d'appel entre un dispositif de communication appelant et un dispositif de communication appelé dans le réseau GSM-R, le noeud ayant accès à une matrice d'accès susceptible de stocker des associations entre des numéros fonctionnels et des dispositifs de communication spécifiques, les numéros fonctionnels reflétant des informations fonctionnelles utilisées pour permettre la communication entre des dispositifs de communication, le réseau comprenant au moins un commutateur (GMSC) pour traiter des messages, le noeud (SCP) comprenant des moyens pour :

- recevoir une demande d'établissement d'appel en provenance du commutateur (GMSC), la demande comprenant le numéro fonctionnel du dispositif de communication appelant ;
- déterminer en se basant sur la demande reçue en utilisant la matrice d'accès si l'appel est autorisé ; et
- envoyer, lors de la détermination que l'appel est autorisé, un message de connexion au commutateur (GMSC) ;

dans lequel le numéro fonctionnel du dispositif de communication appelant est reçu dans un élément d'information d'utilisateur à utilisateur.

17. Réseau GSM-R comprenant le centre de commutation mobile (GMSC) selon la revendication 14 et le noeud (SCP) selon la revendication 16.

**Figure 4**

**Figure 1**

**FIGURE 3**

17

**FIGURE 2**

Table A

| Msg No. | Msge title | Numbers involved | Number description and transfer requirement for each message |
|---|---|---|---|
| 1 | Setup | called FN | The calling user dials the called FN which is included in the called party number parameter by the originating switch (ISDN or GSM-R) |
| | (MS to network) | calling FN | The calling FN is currently sent in UUS for display to the called party: The invention requires that the calling FN is always included in the UUS to the GMSC. The UUS format for transporting the calling FN is defined below. |
| 2 | Initial Detection Point | called FN | The invention requires that the called FN is included in the Initial DP in order to direct the call to the destination and translate it to its corresponding called MSISDN or ISDN number in the HLRf. The invention uses the Called Party Number parameter. |
| | (GMSC to access matrix) | calling FN | The invention requires that the calling FN is sent to the HLRf to be used in the access matrix to check if the call is allowed. The invention uses the Calling Party Subaddress parameter. |
| 3 | Connect | called MSISDN or ISDN number | The called MSISDN or called ISDN is provided by the HLRf following translation of the called FN. It is sent to the GMSC to route the call. The invention uses the Destination Routing Address parameter. |
| | (access matrix to GMSC) | calling FN called FN | The FNs do not need to be sent back to the GMSC since they have not been modified. |

| 3a | Release Call | cause value | Only the cause value parameter is sent back. |
|---|---|---|---|
| 4 | Setup | calling FN | The calling FN is sent in a UUS parameter for display to the called party. |
| | (Network to MS) | called MSISDN /ISDN No | The called MSISDN or called ISDN number is included in the called party number parameter and used to route the call to the called terminal. |
| 4a | Release Complete | cause value | The calling FN can be sent back to the calling party in the UUS parameter. |

Table 1 - Example of Function of Registration Class

| Class of Registration | Meaning |
|---|---|
| A | Engine/Train cab-radio basic functions |
| B | Maintenance service user |
| C | Operation support user |
| D | Customer support users |
| E | Registration/ De-registration supervisors |

Table 2

| Operation name Service type | Registration (**) | Interrogation (*#) | De-registration (##) | FFE (...) |
|---|---|---|---|---|
| 1 | User | Single | User | FFE |
| 2 | FFE | FFE | Global | FFE |
| 3 | Supervisor | FFE | Supervisor | FFE |
| 9 | FFE | FFE | FFE | FFE |

FFE: For future enhancements

Table 3

| Operation code (** for registration) | E -M | 2-3 characters |
|---|---|---|
| Service code (10 for FM service) | M | 2-3 characters |
| Separation field character (*) | O | 1 character |
| Operation category (1 for user registration, 3 for supervisor registration) | O | 1 character |
| Separation field character (*) | M | 1 character |
| Functional Number (FN) to register | M | 4-15 characters |
| Separation field character (*) | C | 1 character |
| Associated DN/MSISDN (MSISDN or Directory Number (DN) to be given a FN, when different than the served MSISDN) | C | 4-15 characters |
| Ending character (#) | M | 1 character |

Table 4

| Operation code (** for registration) | E -M | 2-3 characters |
|---|---|---|
| Service code (10 for FM service) | M | 2-3 characters |
| Separation field character (*) | M | 1 character |
| Operation service type (1 for user registration, 3 for supervisor registration) | M | 1 character |
| Separation field character (*) | M | 1 character |
| Functional Number FN to register | M | 4-15 characters |
| Separation field character (*) | C | 1 character |
| Associated DN/MSISDN (MSISDN or Directory Number (DN) to be used as forward-to number, when different than the served MSISDN) | C | 4-15 characters |
| Separation field character (*) | M | 1 character |
| Served MSISDN (also forward-to number for user registration and some cases of supervisor registration) | M | 4-15 characters |
| Ending character (#) | M | 1 character |

- Table 5 ( This table also corresponds to Tables, 7, 10, 11, 14 and 15):

| Outcome code | M | 2 characters |
|---|---|---|
| Separation field character (space) | O | 1 character |
| USSD Response | O | n characters |

Table 6

| Registration | | | |
|---|---|---|---|
| **Successful case** | **USSD response** | **Display on MS** | **Outcome Code** |
| Follow me activated | Follow me activated | Follow me activated | 00 |
| **Error codes** | **USSD response** | **Display on MS** | **Outcome Code** |
| UnknownSubscriber | Wrong MSISDN | Wrong MSISDN | 01 |
| IllegalSS-Operation | Request rejected | Request rejected - Call operator | 02 |
| SS-SubscriptionViolation | Wrong MSISDN or feature not provisioned | Wrong MSISDN or Feature not provisioned | 03 |
| Conditional forwardings active (SS-Incompatibility) | Check conditional forwardings | Check conditional forwardings / Call Operator | 04 |
| Call barring active (SS-Incompatibility) | Check Barrings | Check Barrings /Call Operator | 05 |
| FunctionalNumberAlready Registered | Functional number already registered | Functional number already registered | 06 |
| **Deregistration** | | | |
| **Successful case** | **USSD response** | **Display on MS** | **Outcome Code** |
| Follow me deactivated | Follow me deactivated | Follow me deactivated | 10 |
| **Error codes** | **USSD response** | **Display on MS** | **Outcome Code** |
| UnknownSubscriber | Wrong MSISDN | Wrong MSISDN | 11 |
| IllegalSS-Operation | Request rejected | Request rejected - Call operator | 12 |
| SS-SubscriptionViolation | Wrong MSISDN or feature not provisioned | Wrong MSISDN or Feature not provisioned | 13 |
| Functional number not registered | Functional number not registered | Functional number not registered | 14 |
| **Interrogation** | | | |
| **Successful case** | **USSD response** | **Display on MS** | **Outcome Code** |
| Forwarded to Number | Forwarded to Number | 'Forwarded to Number' digits | 20 |
| **Error codes** | **USSD response** | **Display on MS** | **Outcome Code** |
| UnknownSubscriber | Wrong MSISDN | Wrong MSISDN | 21 |
| IllegalSS-Operation | Request rejected | Request rejected - Call operator | 22 |
| SS-SubscriptionViolation | Wrong MSISDN or feature not provisioned | Wrong MSISDN or Feature not provisioned | 23 |
| Functional number not registered | Functional number not registered | Functional number not registered | 24 |

Table 8

| Operation code (*# for interrogation) | E -M | 2-3 characters |
|---|---|---|
| Service code (10 for FM service) | M | 2-3 characters |
| Separation field character (*) | M | 1 character |
| Operation service type (1 for single interrogation of FN) | O | 1 character |
| Separation field character (*) | O | 1 character |
| Functional Number (F) to be interrogated | M | 4-15 characters |
| Ending character (#) | M | 1 character |

Table 9

| Operation code (*# for interrogation) | E -M | 2-3 characters |
|---|---|---|
| Service code (10 for FM service) | M | 2-3 characters |
| Separation field character (*) | M | 1 character |
| Operation service type (1 for single interrogation of FN) | M | 1 character |
| Separation field character (*) | M | 1 character |
| Functional Number (FN) to be interrogated | M | 4-15 characters |
| Separation field character (*) | M | 1 character |
| Served MSISDN | M | 4-15 characters |
| Ending character (#) | M | 1 character |

Table 12

| Operation code (## for de-register) | E -M | 2-3 characters |
|---|---|---|
| Service code (10 for FM service) | M | 2-3 characters |
| Separation field character (*) | M | 1 character |
| Operation service type (1 for user de-registration, 2 for global de-registration, 3 for supervisor de-registration) | O | 1 character |
| Separation field character (*) | O | 1 character |
| Functional Number FN | M -C | 4-15 characters |
| Ending character (#) | M | 1 character |

Table 13

| Operation code (## for de-register) | E -M | 2-3 characters |
|---|---|---|
| Service code (10 for FM service) | M | 2-3 characters |
| Separation field character (*) | M | 1 character |
| Operation service type (1 for user de-registration, 2 for global de-registration, 3 for supervisor de-registration) | M | 1 character |
| Separation field character (*) | M | 1 character |
| Functional Number FN | M | 4-15 characters |
| Separation field character (*) | M | 1 character |
| Service MSISDN | M | 4-15 characters |
| Ending character (#) | M | 1 character |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0431453 A